# EUROPEAN PATENT APPLICATION

(11) **EP 3 369 610 A1**
(43) Date of publication of application: **05.09.2018**
(21) Application number: 17158597.9
(22) Date of filing: 01.03.2017
(51) Int. Cl.: B60N 2/00, G01G 19/414, B60R 21/015

(54) **SYSTEM TO DETERMINE THE POSTURE AND WEIGHT OF AN OCCUPANT OF A SEAT**

(71) Applicant: Delphi Technologies, Inc., Troy, MI 48007-5052 (US)
(72) Inventor: FISCHER, Thomas, 57482 Wenden (DE)
(74) Representative: Robert, Vincent

(57) **Abstract**

A seat occupant detection system comprising:
a seat, said seat including a plurality of pressure sensors or switch sensors located integral with said seat, said sensors adapted to give a variable output dependent on the weight or force acting on the respective sensor from an occupant when seated on the seat; and processing means adapted to process the output from said sensors to give an indication of the posture of the seat occupant. The system may be used with a weight estimation system to refine estimated weight.

## Description

### TECHNICAL FIELD

This application relates to an apparatus and method to determine the posture of an occupant in a seat, and further to determine the accurate weight of an occupant sitting in a seat. It has particular application to vehicle mounted occupant detection systems.

### BACKGROUND OF THE INVENTION

For vehicle applications, it is not only important to detect whether a seat is occupied by a driver or passenger (occupant) but it is also useful to determine the weight of the occupant. In this way, auxiliary vehicle systems, particularly safety systems, can be optimized. There are known occupant detection systems which estimate the weight of an occupant and categorise occupants in terms of weight and also which detect centre of gravity. However these have problems with the reliability and the variability of results.

Known systems to estimate weight typically use pressure sensing devices located or embedded in the seat. A well-used current system uses/incorporates a bladder system, where a bladder is embedded in the seat such that it is spread over a relatively wide area of the seat; the pressure produced within the bladder consequent to an occupant sitting in the seat is measured to determine the occupant weight; the pressure is indicative of the occupant weight.

However, such systems are often not able to distinguish adult occupants (e.g. in terms of weight categorization) due to the fact that there can be variation of results influenced by the occupants seating position (i.e. the posture of the occupant). The occupant may for example be normally seated or he may be slouched, or sitting in a non-symmetrical position. This results in a large variation of weight results for the same occupant and decreases reliability.

In such current systems, even though the use of a bladder system means that the force from a seated occupant over the seating area is effectively integrated which improves reliability, variation in posture decreases reliability to the extent that actual occupant weight varies from the estimated occupant weight. There is no information regarding areas of high force due to e.g. particular postures, where force/pressure may act on one portion or side of the seat. This also means that even in bladder systems, determining occupant weight and/or apportioning an occupant into a weight class is not reliable due to the variation of the seated weight induced by the variation of the seating position mandated by specification and the different seat positions (height, track, backrest,..) as well as the occupant posture. Other systems include capacitive sensing but these have huge stability and ageing issues.

It is an object of the invention to overcome these problems.

### SUMMARY OF THE INVENTION

In one aspect is provided a seat occupant detection system comprising:
a seat, said seat including a plurality of pressure sensors or switch sensors located integral with said seat, said sensors adapted to give a variable output dependent on the weight or force acting on the respective sensor from an occupant when seated on the seat; and processing means adapted to process the output from said sensors to give an indication of the posture of the seat occupant.

Said indication of posture may include one or more of the following: normally seated, occupant slouched, occupant leaning forward, occupant turned to the right, occupant turned to the left ; occupant having legs crossed, and occupant having legs pulled back.

The system may include sensing means adapted to give an indication of the total occupant weight when an occupant is seating on the seat.

Said sensing means may comprise a bladder system including a bladder embedded in said seat, and including means to measure the pressure in said bladder, and means to estimate the occupant weight from said pressure.

Said sensors may be located on or adjacent to said bladder.

Said sensors may be switch sensors adapted to give an output signal when the force exerted on said switch sensors exceeds a threshold value.

Said switch sensors may be formed as planar array.

Said switch sensors may be arranged as a series cascade of resistors, the output of which is adapted to give a single value dependent on which switches are activated.

The system may include processing means adapted to refine the estimated occupant weight dependent on the indicated posture.

In a further aspect is provided a method of determining the posture of an occupant in a seat comprising
a) providing a seat including a plurality of pressure or switch sensors located integral with said seat, said sensors adapted to give a variable output dependent on the weight or force acting on the respective sensor from an occupant when seated on the seat;
b) determining the output signal(s) from said sensors when an occupant is seated on said seat;
c) processing the output signals from b) to determine the posture of said occupant.

Step c) may comprise processing said output signals with pre-stored data, said pre-stored data, relating sensor output to one or more pre-defined postures.

Said postures may include one or more of the following: normally seated, occupant slouched, occupant leaning forward, occupant turned to the right, occupant turned to the left; occupant having legs crossed, and occupant having legs pulled back.

The method may include estimating the total weight of an occupant and refining said weight estimation based on the results of step c).

### BRIEF DESCRIPTION OF THE DRAWINGS

The present invention is now described by way of example with reference to the accompanying drawings in which:
Figure 1a shows an overview of an arrangement according to one example;
Figure 1b shows a cross sectional view of the figure 1a system;
Figure 1c shows a schematic view of an array of switch sensors;
Figure 2 shows a plot of the output from a bladder weight measurement system for a set of various occupants having different weights and sitting in different postures.

### DESCRIPTION OF THE PREFERRED EMBODIMENTS

In one simple example, a seat is provided having a plurality of pressure sensors or sensors sensor switches located thereupon, e.g. embedded within the seat. The switch sensors act such as to give a signal only when a particular force/pressure (e.g. threshold acts) upon them. Alternatively the pressure sensors may output a variable signal depending on the pressure applied. The switches are preferably arranged in a horizontal plane, i.e. in the same plane or a plane parallel to the seat (base), and are arranged as an array. The sensor switches/pressure sensors may provide information which can be used to determine occupant seating position/posture. Furthermore the sensor switch/pressure sensors information can be used to in conjunction with weight estimation means to provide enhanced accuracy in terms of weight determination/classification of the occupant.

Preferably a bladder type arrangement as known in the art is used in conjunction with sensor switches. In these known bladder systems, a bladder is embedded in the seat; the pressure within the bladder is measured to give an indication of occupant weight. The sensor switches (e.g. array) may be provided for example on, or adjacent to, the bladder surface. The switch sensors are located at different positions; these may be provided in particular arrays having set patterns.

The switch sensors may be such that they give a signal when a minimum weight occupant is seated in a normal seating posture i.e. with his pivot point in the rear area of the seat.

Information from the switch sensors can be processed to determine posture as will be explained hereinafter. Further the switch sensor/ pressure sensor data can be processed in combination with data relating to estimation of occupant weight (e.g. the bladder pressure) so as to provide enhanced weight determination and classification of occupants. The data may also be used to set a confidence value once seating position is normal and stable pressure data achieved, as well as provide (dynamic) occupant classification. The system may provide data regarding adult or child occupants. So in enhanced aspects, the problems of (e.g. adult) occupant weight classification are solved by a combination of a (e.g. bladder based) weight estimation in combination with e.g. bladder -surface based position sensitive force sensor switches for seating position determination.

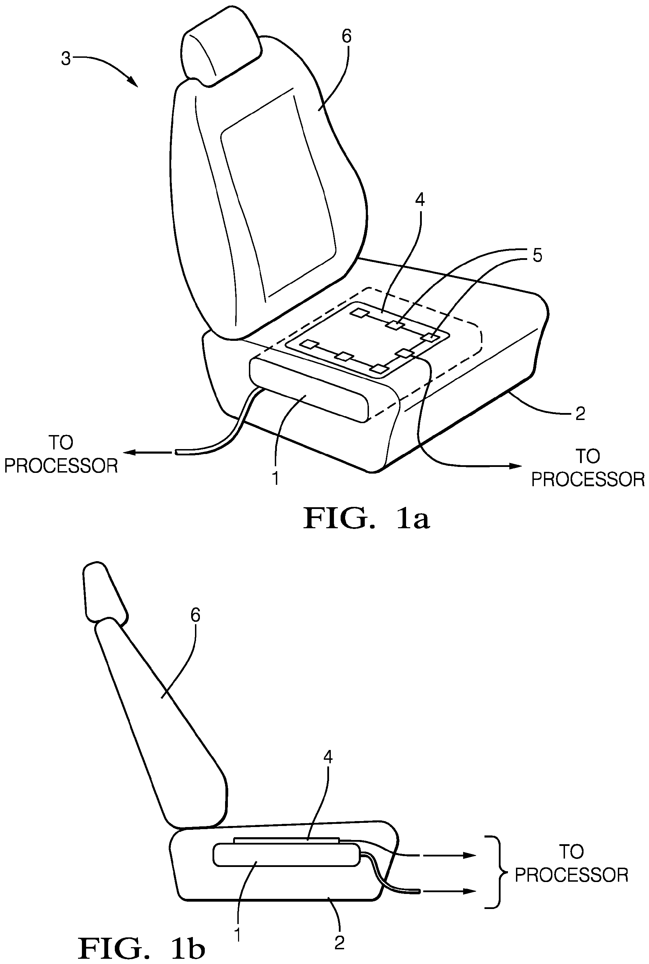

Figure 1a shows an overview of an arrangement according to one example. The figure thus shows a schematic diagram of the hardware of a system according to one example where a bladder 1 is embedded in a seat portion 2 of a vehicle seat 3 as shown. The vehicle seat includes a backrest 6. Located adjacent e.g. on top of the upper surface of the bladder is a switch sensor array 4 comprising a plurality of switch sensors 5. The bladder is connected to pressure sensing means such that the bladder pressure can be determined to give an indication of the weight of the occupant when seated. The switch sensors are connected to data processing means.

Figure 1b shows a cross sectional view of the figure 1a system.

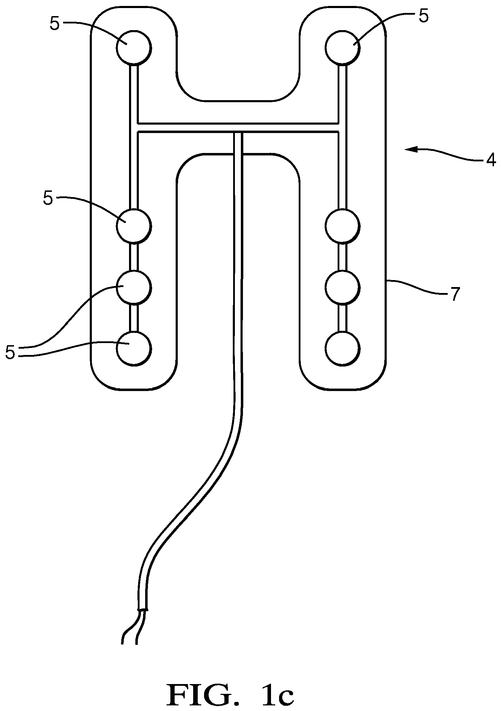

Figure 1c shows a schematic view of an array 4 of switch sensors 5. These switch sensors may comprise foil switches which are activated when a threshold force value is applied thereto. These surface mounted (on surface 7) foil/mechanical switch pattern may be arranged on the top of seat, close to the location of trim or lower side of the foam - close to seat pan, for example.

In the examples the switches are located in two rows. Preferable the distribution of the switches are such that they span from a position (in plan view) on the seat close to the seat backrest 6 to the front of the seat portion 2.

In preferred examples the switches are arranged in a serial connection e.g. may be coded as/by a cascade of resistors so that the measurement of the total resistance of the switch sensors can determine which switches are activated. In this way only a two-wire connection from/to the switch sensor array to processing means is required. The term "cascade of resistors" should be interpreted as such.

Signals from the array of switches is used to determine seating posture so as to, for example, locate the position of the pelvis (pivot point). This can then be factored into the weight measurement from an weight measurement system e.g. the pressure based bladder system.

In order to determine the posture of an occupant from the switch sensor array, in one method test data can provided and used in a correlation process. For example test data may be collated by having occupants sitting in various postures and recording the output from each switch sensor/cascaded switch array. Such data can then be processed and stored by processing means associated with the hardware i.e. the arrangement described above. In subsequent real life appications (use), when an occupant is seated, the switch sensor data provided can then be compared with such pre-stored data (e.g. in a correlationprocess) to select the current posture.

The above system can be used in conjunction with a (e.g. auxiliary) weight measurement system such as a bladder system described above, so as to e.g. provide more accurate weight measurement of the occupant. Signals from the switch sensors (array) can be first used to determine the occupant posture. That is to say the signals from the switch sensors is used to determine the distribution of force or weight from the occupant to the seat, e.g. used to determine the (e.g. pivot point) position of the occupant. This switch sensor data is then used to refine the weight determination, measured by e.g. a bladder based weight determination arrangement. Thus both the weight determined, and the output from the switch sensors can then be processed together in order to determine an improved weight (in terms of accuracy) which may be subsequently used to provide a parameters regarding safety systems such as air bag systems, seat belt tightening systems and such like.

It would be clear to the skilled person the various methods which could be used for this. Again experimental data can be used. A test occupant may be seated in various postures, the measured weight (e.g. from the ladder system) recorded. This may be correlated as described above with determined posture / switch sensor output signals. The determined weight for each posture is then recorded. Variations in actual weight and estimated weight are then correlated with posture. For example in one posture, the measured determined weight may give a lower estimated weight reading and in subsequent applications, if it is determined form the switch sensors that the occupant is in that particular posture, the estimated weight can be refined accordingly.

In this way, the occupant position/posture (determined from the switch sensors) may be used to refine and recalculate the weight determined from the bladder system. Weight thresholds can be calculated dependent on the output of the switch sensors (occupant position) as well as weight determined from e.g. the bladder system.

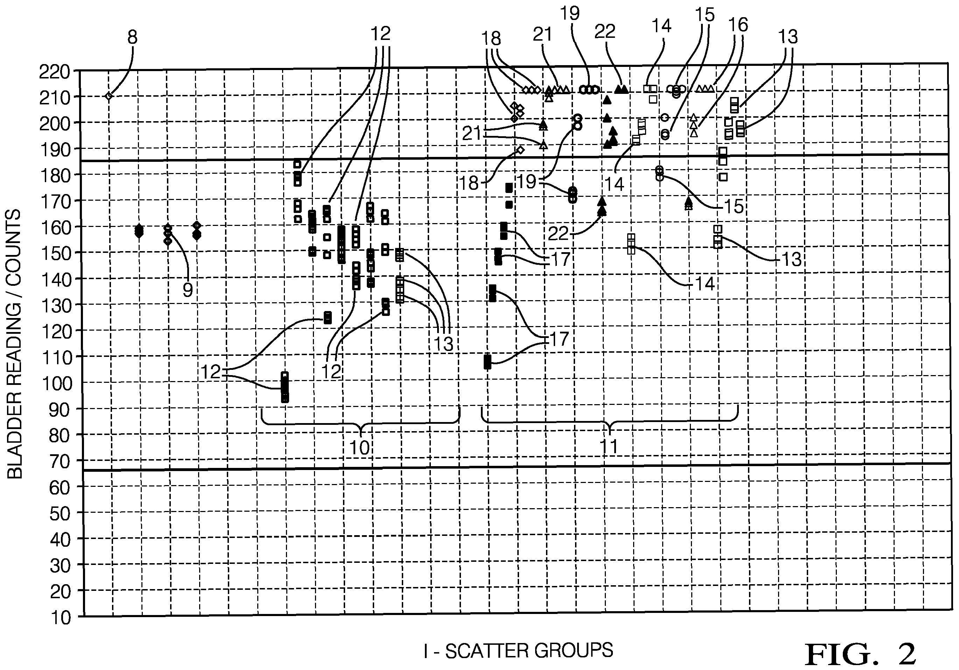

Figure 2 shows a plot of the output from a bladder weight measurement system for a set of various occupants having different weights and sitting in different postures. The y-axis shows an indication therefore of the total weight of an occupant for different examples of weight (e.g. average male/female) as well as for different postures, estimated by a bladder system. On the x-axis is the I-scatter which is used to show spread the results. As can be seen there is variation in estimated weight/bladder pressure for the different occupants depending on seating position/posture.

The figure shows results for an a) an Anthropomorphic Test Dummy (ATD) of 50kg, shown by reference numeral 8, b) an Anthropomorphic Test Dummy (ATD) of 75kg, shown by reference numeral 9. As can be seen for these, there is very little variation in sample of estimated weight (results from bladder pressure. Further there is shown the results of c) three females of different weights (shown by generally reference numeral 10) and d) five males of different weights (shown by reference numeral 11), in various different postures. The different postures are marked with difference reference numerals 12-19. Such seating postures may be leaning forward, seat reclined- slouched, legs pulled back, turned to right, legs crossed, etc.

The circle in the figure shows the results for the male occupant having a weight of 62kg and a height of 179 cm. As can be seen some postures tend to give results that underestimate the weight to different degrees as shown. If the posture is determined by the (e.g. switch) sensor array, the recorded (estimated) weights can be refined accordingly.

## Claims

**1.** A seat occupant detection system comprising:
a seat, said seat including a plurality of pressure sensors or switch sensors located integral with said seat, said sensors adapted to give a variable output dependent on the weight or force acting on the respective sensor from an occupant when seated on the seat; and processing means adapted to process the output from said sensors to give an indication of the posture of the seat occupant.

**2.** A system as claimed in claim 1 wherein said indication of postures includes one or more of the following: normally seated, occupant slouched, occupant leaning forward, occupant turned to the right, occupant turned to the left; occupant having legs crossed, and occupant having legs pulled back.

**3.** A system as claimed in claim 3 including sensing means adapted to give an indication of the total occupant weight when an occupant is seating on the seat.

**4.** A system as claimed in claim 3 wherein said sensing means comprises a bladder system including a bladder embedded in said seat, and including means to measure the pressure in said bladder, and means to estimate the occupant weight from said pressure.

**5.** A system as claimed in claim 4 wherein said sensors are located on or adjacent to said bladder.

**6.** A system as claimed in claims 1 to 5 wherein said sensors are switch sensors adapted to give an output signal when the force exerted on said switch sensors exceeds a threshold value.

**7.** A system as claimed in claims 1 to 6 wherein said switch sensors are formed as planar array.

**8.** A system as claimed in claims 1 to 7 wherein said switch sensors are arranged as a series cascade of resistors, the output of which is adapted to give a single value dependent on which switches are activated.

**9.** A system as claimed in claims 1 to 8 including processing means adapted to refine the estimated occupant weight dependent on the indicated posture.

**10.** A method of determining the posture of an occupant in a seat comprising
a) providing a seat including a plurality of pressure or switch sensors located integral with said seat, said sensors adapted to give a variable output dependent on the weight or force acting on the respective sensor from an occupant when seated on the seat;
b) determining the output signal(s) from said sensors when an occupant is seated on said seat;
c) processing the output signals from b) to determine the posture of said occupant.

**10.** A method as claimed in claim 9 wherein step c) comprises processing said output signals with pre-stored data, said pre-stored data, relating sensor output to one or more pre-defined postures.

**11.** A method as claimed in claim 9 or 10 where said postures includes one or more of the following: normally seated, occupant slouched, occupant leaning forward, occupant turned to the right, occupant turned to the left; occupant having legs crossed, and occupant having legs pulled back.

**12.** A method as claimed in claims 8 to 10 including estimating the total weight of an occupant and refining said weight estimation based on the results of step c).
